# EUROPEAN PATENT SPECIFICATION

(11) **EP 1 478 813 B1**
(45) Date of publication and mention of the grant of the patent: **16.01.2008**
(21) Application number: 03709931.4
(22) Date of filing: 04.02.2003
(51) Int. Cl.: E04B 2/74, E04B 9/18

(54) **Resilient brace**
Elastische Strebe
Etrésillon souple

(30) Priority: 21.02.2002 GB 0204107
(43) Date of publication of application: 24.11.2004
(73) Proprietor: Lafarge Platres S.A., 84195 Avignon (FR)
(72) Inventor: WALKER, Christopher, Lafarge Plasterboard Limited, Bristol BS20 0NF (GB)
(74) Representative: Hirsch & Associés
(86) International application number: PCT/GB2003/000486
(87) International publication number: WO 2003/071044

(56) References cited:
- EP-A- 0 183 362
- WO-A-01/33007
- CH-A- 643 024
- GB-A- 199 333
- GB-A- 826 875
- GB-A- 928 800
- GB-A- 2 157 736
- US-A- 3 046 620
- US-A- 3 950 912
- US-A- 4 244 155

## Description

The present invention relates to a resilient brace for bracing together two portions of stud walling.

Stud walling is a common method of construction of interior walls in the building industry. A stud wall comprises a framework of vertical and horizontal beams on to which plasterboard, for example, may be secured to construct interior walls of a building. To improve the soundproofing of partition walls it is known to construct a `twin frame partition' by placing two sections of stud walling together, with a gap inbetween the two sections. A problem associated with twin frame partitions is that above a certain size the inherent flexibility of the stud walling makes each side of the partition prone to flexing and bowing. To avoid this it is known to fasten the two sections of the partition together using a bracket. However, the stiff bracket transmits acoustic vibrations across the gap, thus reducing the soundproofing performance of the partition.

It has previously been known to connect two portions of stud walling together by securing a bracket to each of the two portions of stud walling and connecting the two brackets together using a resilient connector. The resilient connector may, for example, be in the form of a nut and bolt threaded through a large rubber washer, the rubber washer being fastened between the two securing brackets.

WO-A- 01/33007 discloses a construction beam, which includes a pair of lateral members and a resilient web extending therebetween. The resilience of the web helps to attenuate sound transmission through the beam from one lateral member to the other. The resilient web provided is conveniently made from a unitary piece of material. The web is preferably (but not necessarily) provided with spacers formed thereon, so that the lateral members can be easily oriented relative to the web and to each other, so as to be self-jigging. The spacers may conveniently be formed by cutting and bending tabs in the material of the web in desired locations.
US-A 4 244 155 discloses a bent steel insert is provided with top and bottom pairs of abutments for engaging the inside surfaces of top and bottom rows of concrete blocks to center the rows on top of each other. It may be made of a single strip of steel by: bending it adjacent one end at approximately a 90° angle; by doubling it back upon itself to project to the opposite side of the original plane of the strip; and then bending it back again to the original plane to provide top and bottom abutments at one end. The opposite end of the strip is similarly bent to form abutments which are a mirror a image of those previously described to thereby provide pairs of top and bottom abutments for centering building blocks on top of each other.
EP-A- 0 183 362 relates to a wall tie of strip metal has a pair of twists adjacent its end portions and which are formed with mortar keying formations. The central cavity bridging portion lies upright and has an overall profile which includes an arched formation and an inverted arched formation affording a water drip. The tie is symmetrical with direct or reversed symmetry about its mid point.
GB-A- 826 875 discloses a wall tie, which receives waterproof sheets in loops with the top of the sheet held in loops. By this means a waterproof barrier is provided. Heat insulation may be accommodated between the inner leaf of a cavity wall and the sheets. A construction of cross wall is disclosed in which the ties are used to link the projecting ends of the wall with the sheets acting as a vertical damp-proof course.
CH-A- 643 024 discloses a spring part is provided between two end parts which are bent in the form of a zig-zag and are used to anchor the spring anchor. The spring anchor comprises a bent strip-metal piece. This strip-metal piece is twisted helically in its central region to form the spring part, which is adjoined by the two end parts. In order that these end parts can be better anchored in the leaves of a double-leaf masonry wall, they are configured in the form of a zig-zag, holes being provided at the points of inversion of the zig-zag bends. Said spring anchor permits the two leaves of a masonry wall which are connected by it to have a sufficient, flexible freedom of movement, while the distance between the two leaves is well-defined by the anchor.

A frame member for a sound attenuating wall is disclosed in US patent no. 3,950,912. The frame member is formed by two elements interconnected by weakened portions of material. Wall sheets may be attached to each frame member element. As each wall sheet is attached to a separate frame elements sound attenuation is provided, yet, because the separate elements are interconnected, the frame can be handled as a single piece.

An alternative known brace comprises a substantially planar piece of strip spring metal that is folded over on itself twice so as to form a substantially "S" or "Z" shape, the top and bottom arms of the shape being extended to form attachment brackets that are in turn secured to the respective parts of the stud walls. Although this brace has the advantage of being a single strip of metal, it has the disadvantage that compressive or tensile forces acting upon it tend to either "roll-up" or "unroll" the folded parts of the brace, and consequently the brace is relatively stiff and prone to transmitting vibrational forces.

Therefore, it would be desirable to have a load bearing resilient brace for connecting together two portions of stud walling that is easy to manufacture and fit and that exhibits goods vibrational absorption qualities.

According to a first aspect of the invention there is provided a resilient brace for connecting together first and second elements of a stud wall, the resilient brace comprising first and second attachment portions attachable to the first and second stud wall elements respectively, the first and second attachment portions being located substantially on a stress axis along which stresses act between said stud wall elements, the resilient brace further comprising an intermediate resilient portion extending between the attachment portions as a continuous extension thereof with at least three successive planar portions angled relative to one another and the attachment portions by means of respective folds so that each planar portion extends laterally of the stress axis, wherein: each fold between adjacent planar portions is perforated by two holes arranged in two rows equally spaced about the central axis of the brace, with the exception of outer folds between the planar sections at the extremities of the resilient portion and the respective attachment portions, said outer folds being arranged to pass equidistant between two pairs of holes.

Preferably, successive planar portions extend laterally one way and then the other relative to said stress axis and progressively in one direction along said stress axis.

Additionally, one or more of said planar portions extends across said stress axis.

Preferably, said brace is symmetrical about a central plane normal to said stress axis.

Preferably, said successive planar portions are angled relative to one another at substantially the same angle.

Additionally, the resilient brace comprises a plurality of resilient portions interconnected by one or more further elements extending along or in parallel with the stress axis.

Preferably, said brace is manufactured from spring steel.

According to a second aspect of the invention there is provided a stud wall comprising first and second wall portions and a resilient brace connecting together said first and second wall portions, wherein the resilient brace comprises a resilient brace according to the invention.

An embodiment of the present invention will now be described, by way of example only, with reference to the accompanying figures, in which:
Figure 1 shows a blanking plate prior to being formed into a brace according to an embodiment of the present invention;
Figure 2 shows a side view of a resilient brace according to an embodiment of the present invention;
Figure 3 shows a plan view of the resilient brace shown in Figure 2 formed from a blanking plate shown in Figure 1;
Figure 4 schematically illustrates a resilient brace according to the present invention in use;
Figure 5 schematically illustrates a resilient brace according to the present invention in conjunction with an extension plate when in use; and
Figures 6a and 6b show further embodiments of a resilient brace according to the present invention.

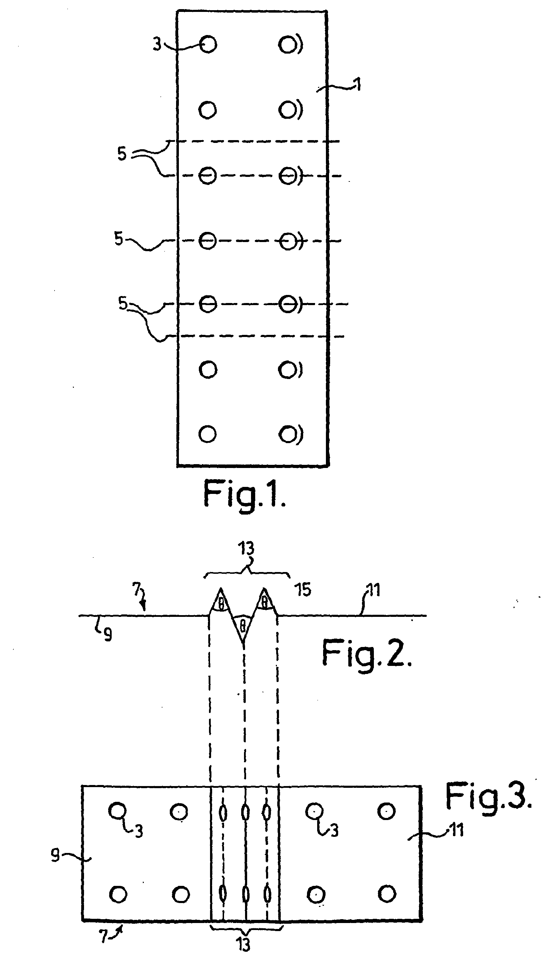

Figure 1 shows a substantially planar elongate blanking plate 1 of spring steel from which a resilient brace according to an embodiment of the present invention can be formed. The blanking plate 1 is perforated with a plurality of holes 3 arranged in two rows equally spaced about the central elongate axis of the blanking plate 1. The holes 3 in each row are equally spaced from each other and are arranged laterally in pairs. A resilient brace according to an embodiment of the present invention can be formed by folding the blanking plate 1 in alternate directions along fold lines 5. The fold lines 5 are arranged to pass through pairs of the holes 3, with the exception of the outer two fold lines that are arranged to pass equidistant between two pairs of holes 3. This arrangement of fold lines directly influences the operation of the resilient brace in a manner that will be described further below with reference to Figure 2.

Figure 2 shows a resilient brace formed from the blanking plate of Figure 1. The resilient brace 7 has first and second planar attachment portions 9, 11 located in a common plane at either end of the brace 7. The central part of the blanking plate 1 is folded in alternate directions along lines 5 to form a resilient portion 13 extending between the first and second attachment portions 9,11. Successive planar sections 15 between the fold lines 5 extend laterally of the common plane and are orientated at an angle θ with respect to one another.

In use, when the resilient brace is connected between two portions of stud walling, for example the individual frames of a twin frame partition, stresses act along the axis of the resilient brace in said common plane. The planar sections 15 of the resilient portion 13 of the brace 7 extend laterally of this stress axis. That is to say, the planar sections 15 extend to either one side or the other of the stress axis, or extend across it.

The remaining holes in the first and second attachment portions 9,11 facilitate the attachment of the resilient brace 7 to respective portions of the stud walling.

As indicated above with reference to Figure 1, the fold lines 5 between the planar sections 15 at the extremities of the resilient region 13 and the respective attachment portions 9, 11 occur where there are no holes in the original blanking plate. In contrast, the remaining fold lines intersect pairs of holes 3, thereby reducing the stiffness of the 'fold' and increasing the resilience of that portion of the brace. Thus, when a compressive or tensile force is applied along the axis of the attachment portions 9, 11 the majority of deflection occurs between adjacent planar sections 15, rather than between the outer planar sections 15 and the adjacent attachment portions. Vibration along the axis of the resilient brace 7 is thus accommodated by the opening and closing action between adjacent planar sections 15. The use of spring steel provides the brace 7 with the inherent resilience to absorb acoustic vibrations yet still have the strength and elasticity to act as a load bearing member without undergoing plastic deformation.

In the embodiment shown in Figure 2 the angle between adjacent planar sections 15 is such that successive planar sections 15 extend progressively along the stress axis. This advantageously avoids the "rolling up" effect experienced by resilient braces known in the prior art.

Preferably, the resilient portion 13 of the resilient brace comprises four planar sections 15, as this configuration has been found to provide good absorption of acoustic vibrations whilst being relatively compact. However, it will be appreciated that any number of planar sections 15 may be used to form the resilient portion 13 of the brace 7, down to a minimum of two. Where three or more planar members 15 are used, preferably at least one of the planar sections will extend across the stress axis.

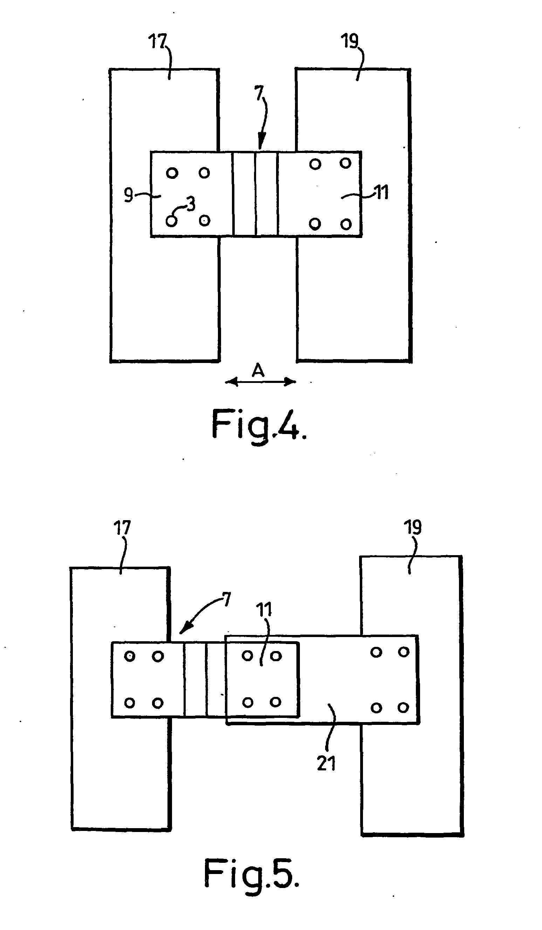

Figure 4 shows a resilient brace 7 according to embodiments of the present invention in use. The resilient brace 7 is secured to first and second portions 17,19 of the stud walling by means of, for example, screws or nails driven through the holes 3 in the attachment portions 9,11. The resilient brace 7 therefore allows vibrational movement in the direction of the double headed arrow A between the first and second portions 17,19 of the stud walling by virtue of the opening and closing action between the planar sections 15 as previously explained.

Figure 5 shows a further example of resilient brace 7 in use to resiliently brace a first portion of stud walling 17 with respect to a second portion of stud walling 19. However, in this example, the first and second portions of stud walling 17,19 are located a greater distance apart that the distance between the opposite ends of the resilient brace 7. A extension piece 21 is therefore secured to the second attachment portion 11 of the resilient brace and is also secured to the second portion 19 of the stud walling. The extension piece 21 may be any linear member suitable for securing to both the resilient brace and the stud wall portion. For example, the extension piece 21 may comprise a length of U-shaped channel section, or may be one of the blanking plates 1 used to form the resilient brace 7, or even a second resilient brace. Alternatively, the resilient brace may be manufactured with attachment portions of unequal length, to accommodate differing separations of stud wall portions.

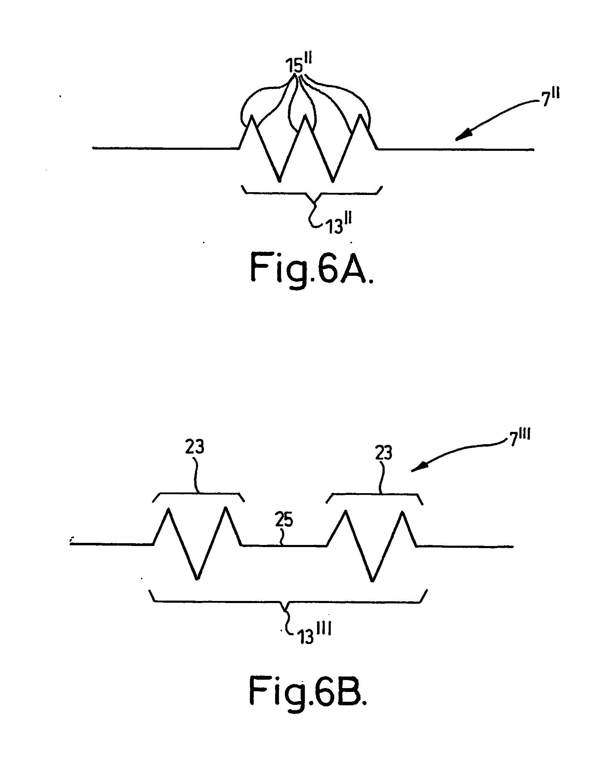

Figures 6a and 6b show further examples of resilient braces according to the present invention. Figure 6a shows a resilient brace 7' in which the resilient portion 13' comprises six planar sections 15'. This arrangement provides a resilient brace that can absorb vibrations of a relatively large amplitude, due to the increased length of the resilient portion.

Figure 6b shows a resilient brace 7" in which the resilient portion 13" has two individual sections 23, each comprising a number of successive planar sections 15". The individual sections 23 are interconnected by a spacing member 25.

The resilient brace may also be used in the construction of suspended ceilings. In this case the brace is used to secure a suspended ceiling panel from a fixed, ceiling support. Although the brace is in tension due to the weight of the suspended ceiling panel, it behaves in the same manner as described previously in relation to partition wall panels and provides similar advantages.

## Claims

1. A resilient brace (7) for connecting together first and second elements (17, 19) of a stud wall, the resilient brace comprising first and second attachment portions (9, 11) attachable to the first and second stud wall elements respectively, the first and second attachment portions being located substantially on a stress axis along which stresses act between said stud wall elements (17, 19), **characterized in that** the resilient brace further comprises an intermediate resilient portion (13) extending between the attachment portions (9, 11) as a continuous extension thereof with at least three successive planar portions (15) angled relative to one another and the attachment portions (9, 11) by means of respective folds so that each planar portion extends laterally of the stress axis, and **in that**
each fold (5) between adjacent planar portions (15) is perforated by two holes (3) arranged in two rows equally spaced about the central axis of the brace (7), with the exception of outer folds between the planar sections at the extremities of the resilient portion (13) and the respective attachment portions (9, 11), said outer folds being arranged to pass equidistant between two pairs of holes.

2. A resilient brace as claimed in claim 1, wherein successive planar portions (15) extend laterally one way and then the other relative to said stress axis and progressively in one direction along said stress axis.

3. A resilient brace as claimed in claim 1 or 2, wherein one or more of said planar portions (15) extends across said stress axis.

4. A resilient brace as claimed in any preceding claim, wherein said brace is symmetrical about a central plane normal to said stress axis.

5. A resilient brace according to any preceding claim, wherein said successive planar portions (15) are angled relative to one another at substantially the same angle.

6. A resilient brace according to any preceding claim further comprising a plurality of resilient portions (13) interconnected by one or more further elements extending along or in parallel with the stress axis.

7. A resilient brace according to any preceding claim, wherein said brace (7) is manufactured from spring steel.

8. A stud wall comprising first and second wall portions (17, 19) and a resilient brace (7) connecting together said first and second wall portions, **characterised in that** the resilient brace comprises a resilient brace according to any one of claims 1 to 7.

## Patentansprüche

1. Elastischer Bügel (7) zum Miteinander-Verbinden erster und zweiter Elemente (17, 19) einer Ständerwand, wobei der elastische Bügel erste und zweite Anbringungsabschnitte (9, 11) umfasst, welche an dem ersten beziehungsweise dem zweiten jeweiligen Ständerwandelement anbringbar sind, wobei der erste und der zweite Anbringungsabschnitt im Wesentlichen auf einer Belastungsachse angeordnet ist, entlang welcher Belastungen zwischen den Ständerwandelementen (17, 19) wirken, **dadurch gekennzeichnet, dass** der elastische Bügel des Weiteren einen elastischen Zwischenabschnitt (13) umfasst, welcher sich zwischen den Anbringungsabschnitten (9, 11) als eine fortlaufende Verlängerung davon mit wenigstens drei aufeinander folgenden ebenen Abschnitten (15) erstreckt, welche relativ zueinander und den Anbringungsabschnitten (9, 11) mittels entsprechender Falten abgewinkelt sind, so dass sich jeder ebene Abschnitt seitlich zur Belastungsachse erstreckt, und dass
jede Falte (5) zwischen benachbarten ebenen Abschnitten (15) durch zwei Löcher (3) durchbrochen ist, die in zwei Reihen gleichen Abstands zur Mittelachse des Bügels (7) angeordnet sind, mit Ausnahme der äußeren Falten zwischen den ebenen Abschnitten an den äußersten Enden des elastischen Abschnitts (13) und den jeweiligen Anbringungsabschnitten (9, 11), wobei die äußeren Falten angeordnet sind, um mit gleichem Abstand zwischen zwei Paaren Löchern hindurch zu gehen.

2. Elastischer Bügel gemäß Anspruch 1, wobei aufeinander folgende ebene Abschnitte (15) sich seitlich in eine Richtung und dann die andere, relativ zur Belastungsachse und fortschreitend in eine Richtung entlang der Belastungsachse, erstrecken.

3. Elastischer Bügel gemäß Anspruch 1 oder 2, wobei einer oder mehrere ebene Abschnitte (15) sich quer der Belastungsachse erstrecken.

4. Elastischer Bügel gemäß jedem vorangehenden Anspruch, wobei der Bügel symmetrisch um eine Mittelebene normal zur Belastungsachse ist.

5. Elastischer Bügel gemäß jedem vorangehenden Anspruch, wobei aufeinander folgende, ebene Abschnitte (15) relativ zu einander mit im Wesentlichen gleichem Winkel abgewinkelt sind.

6. Elastischer Bügel gemäß jedem vorangehenden Anspruch, des Weiteren umfassend eine Mehrzahl elastischer Abschnitte (13), welche durch eines oder mehrere weitere Elemente miteinander verbunden sind, die sich entlang oder parallel zur Belastungsachse erstrecken.

7. Elastischer Bügel gemäß jedem vorangehenden Anspruch, wobei der Bügel (7) aus Federstahl hergestellt ist.

8. Ständerwand, umfassend erste und zweite Wandabschnitte (17, 19) und einen elastischen Bügel (7), welcher die ersten und zweiten Abschnitte miteinander verbindet, **dadurch gekennzeichnet, dass** der elastische Bügel einen elastischen Bügel gemäß jedem der Ansprüche 1 bis 7 umfasst.

## Revendications

1. Un étrésillon résilient (7) pour relier ensemble un premier et un deuxième éléments (17, 19) d'une paroi à ossature à claire-voie, l'étrésillon résilient comprenant des première et deuxième parties d'attache (9, 11) susceptibles d'être fixées respectivement au premier et au deuxième éléments de la paroi à ossature à claire-voie, les première et deuxième parties d'attache étant agencées sensiblement le long d'un axe de contrainte le long duquel agissent les contraintes entre lesdits éléments (17, 19) de la paroi à claire- voie, **caractérisé en ce que** l'étrésillon résilient comprend en outre une partie intermédiaire résiliente (13) s'étendant entre les parties d'attache (9, 11) en constituant un prolongement continu de celles-ci présentant au moins trois parties planes successives (15) formant un angle l'une par rapport à l' autre et par rapport aux parties d'attache (9, 11) grâce à des plis respectifs de sorte que chaque partie plane s'étende latéralement par rapport à l'axe de contrainte, et **en ce que** :
chaque pli (5) entre des parties planes adjacentes (15) est perforé de deux trous (3) agencés selon deux rangées également espacées autour de l'axe central de l'étrésillon (7), à l'exception des plis les plus externes entre les parties planes aux extrémités de la partie résiliente (13) et les parties d'attache respectives (9, 11), lesdits plis les plus externes étant agencés pour traverser de façon équidistante entre deux paires trous.

2. Un étrésillon résilient selon la revendication 1, dans lequel des parties planes successives (15) s'étendent latéralement dans un sens et ensuite dans l'autre sens par rapport audit axe de contrainte et de façon progressive selon une direction le long dudit axe de contrainte.

3. Un étrésillon résilient selon la revendication 1 ou 2, dans lequel une ou plusieurs desdites parties planes (15) s'étend ou s'étendent de façon à traverser ledit axe de contrainte.

4. Un étrésillon résilient selon l'une quelconque des revendications précédentes, dans lequel ledit étrésillon est symétrique autour d'un plan central perpendiculaire audit axe de contrainte.

5. Un étrésillon résilient selon l'une quelconque des revendications précédentes, dans lequel lesdites parties planes successives (15) forment un angle qui est sensiblement le même angle, l'une par rapport à l'autre.

6. Un étrésillon résilient selon l'une quelconque des revendications précédentes, comprenant en outre une pluralité de parties élastiques interconnectées au moyen d'un ou de plusieurs éléments supplémentaires qui s'étendent le long dudit axe de contrainte ou parallèlement à celui-ci.

7. Un étrésillon résilient selon l'une quelconque des revendications précédentes, dans lequel ledit étrésillon (7) est fabriqué à partir d'acier à ressort.

8. Une paroi à ossature à claire-voie comprenant des première et deuxième parties de parois (17, 19) et un étrésillon résilient (7) reliant lesdites première et deuxième parties de parois, **caractérisée en ce que** l'étrésillon résilient comprend un étrésillon élastique selon l'une quelconque des revendications 1 à 8.
